# EUROPEAN PATENT APPLICATION

(11) **EP 4 610 319 A1**
(43) Date of publication of application: **03.09.2025**
(21) Application number: 23882914.7
(22) Date of filing: 22.09.2023
(51) Int. Cl.: C09D 133/06, C09D 183/04, C09D 5/18, C09D 7/61, C09D 7/63, C08K 5/523, C08J 9/04, C08F 230/08

(54) **COATING COMPOSITION**

(30) Priority: 26.10.2022 KR 20220139349
(71) Applicant: KCC Corporation, Seoul 06608 (KR)
(72) Inventor: JEONG, Seok Hee, Yongin-si Gyeonggi-do 17004 (KR); UEOM, Kyung Il, Hwaseong-si, Gyeonggi-do 18379 (KR); KIM, In Seon, Yongin-si, Gyeonggi-do 17176 (KR)
(74) Representative: Pfenning, Meinig & Partner mbB
(86) International application number: PCT/KR2023/014538
(87) International publication number: WO 2024/090807

(57) **Abstract**

The present invention relates to a coating composition having excellent heat resistance, weather resistance, and fire propagation delay performance.

## Description

### TECHNICAL FIELD

The present invention relates to a coating composition having excellent heat resistance, weather resistance, and fire propagation delay performance.

### BACKGROUND ART

Secondary batteries have been being applied in various fields such as portable electronic devices and automobiles, and research and development on secondary batteries with high energy density, discharge voltage, and output stability are being continuously carried out. Recently, the demand for electric vehicles has been continuously increasing in terms of eco-friendliness and energy efficiency, and the development of a battery that is used in an electric vehicle (EV) or a hybrid electric vehicle (HEV) is actively underway.

In order to produce a large amount of power required for driving an automobile, multiple battery modules are combined to form an automobile battery. In a case where the temperature inside the battery increases rapidly due to various causes such as pressure, impact, and electrical short circuit, heat energy may be transferred serially between the battery modules, which may cause a very powerful fire. As a result, a battery that is used in an automobile is required to have particularly high heat resistance and weather resistance.

To solve these problems, a technology for applying an insulating layer to an automobile battery cell was applied. For example, Korean Patent Publication No. 2021-0134342 discloses a method for applying an external insulating layer to a housing of a battery cell. For another example, a technology for installing a fire extinguishing pack containing a fire extinguishing substance between modules of battery cells has been proposed.

However, prior technologies have the disadvantage of complicating the structure of the automobile battery or not providing heat resistance and weather resistance sufficient to delay flame propagation.

### DISCLOSURE OF THE INVENTION

### TECHNICAL PROBLEM

The present invention provides a coating composition having excellent heat resistance, weather resistance, and fire propagation delay performance.

### TECHNICAL SOLUTION

The coating composition according to the present invention comprises an acrylic-silicone resin and a flame retardant comprising an inorganic flame retardant and a liquid flame retardant.

### ADVANTAGEOUS EFFECTS

The present invention provides a coating composition having excellent heat resistance, weather resistance, and fire propagation delay performance. The coating composition according to the present invention can be applied for coating of a secondary battery, particularly for coating of a battery module or battery pack of an electric vehicle. The coating composition according to the present invention can delay the fire propagation between electric vehicle battery modules, thereby ensuring the time for human evacuation, and can locally limit the area where fire occurs, thereby minimizing the recovery range in a case of repairing a battery.

### BEST MODE FOR CARRYING OUT THE INVENTION

Hereinafter, the present invention will be described in detail. However, the present invention is not limited to the following contents, and each constitutional element may be variously modified or may be optionally mixed as necessary. As a result, it should be understood to include all modifications, equivalents, or substitutes, which are included in the scope of thought and technology of the present invention.

The "glass transition temperature" used in the present specification is measured by a conventional method known in the field of the related art, and it can be measured by, for example, thermomechanical analysis (TMA) or differential scanning calorimetry (DSC). The "particle size (D50)" is measured by a conventional method known in the field of the related art, and it can be measured by, for example, laser light scattering (LLS).

The coating composition according to the present invention comprises an acrylic-silicone resin and a flame retardant comprising an inorganic flame retardant and a liquid flame retardant.

### Acrylic-silicone resin

An acrylic-silicone resin acts to provide heat resistance, weather resistance, and water resistance to a dry coating film. In addition, it acts as a skeleton of a foamed carbonized layer by changing a state of the coating film into a fluid state in a case of being exposed to a high temperature, and then causing the coating film to undergo expansion and foaming in a case where gas is generated.

The acrylic-silicone resin can be manufactured by copolymerizing a (meth)acrylate-based monomer and a silicone monomer. In a case of copolymerizing the above-described acrylic-silicone resin, another monomer may be further included.

As the above-described (meth)acrylate-based monomer, butyl (meth)acrylate, methyl (meth)acrylate, 2-hydroxyethyl (meth)acrylate, 2-hydroxymethyl (meth)acrylate, dimethylaminoethyl (meth)acrylate, glycidyl (meth)acrylate, or a mixture thereof, or the like can be used. As the above-described silicone monomer, 3-(meth)acryloxypropyltrimethoxysilane, 3-(meth)acryloxypropylmethyldimethoxysilane, 3-(meth)acryloxypropyltriisopropenoxysilane, vinyltrimethoxysilane, vinyltriethoxysilane, vinyltrichlorosilane, or a mixture thereof, or the like can be used. In addition, as another copolymerizable monomer that is capable of being subjected to copolymerization, a monomer having a (meth)acrylic acid group, styrene, or a mixture thereof, or the like can be used.

For example, the acrylic-silicone resin contains a 3-(meth)acryloxypropyltrimethoxysilane (MPTMS) group. For another example, the acrylic-silicone resin contains a 3-(meth)acryloxypropyltrimethoxysilane (MPTMS) group and a methyltrimethoxysilane (MTMS) group. In this case, silanol of 3-(meth)acryloxypropyltrimethoxysilane (MPTMS) and silanol of methyltrimethoxysilane (MTMS) in the acrylic-silicone resin are crosslinked by a siloxane bond, where the siloxane bond has a very chemically stable structure as compared with a C-C bond of an organic polymer, and thus it can improve the heat resistance and weather resistance of the coating composition.

The above-described acrylic-silicone resin may have a solid content of 30% to 50%, for example, 40% to 50%, may have a glass transition temperature of 0°C to 45°C, for example, 20°C to 40°C, and may have a particle size (D50) of 30 nm to 300 nm, for example, 100 nm to 200 nm. In a case where the solid content of the acrylic-silicone resin is below the range described above, the crosslinking density is decreased during the coating film formation, which may result in poor water resistance and poor coating film strength. In a case where the solid content of the acrylic-silicone resin exceeds the above-described range, the bonding force between monomers is increased during the resin synthesis, which may increase the generation of resin lumps, which have a particle size of 1 mm or more and gels. In a case where the glass transition temperature of the acrylic-silicone resin is below the range described above, stickiness occurs on the surface of the coating film, which may easily contaminate the coating film. In a case where the glass transition temperature of the acrylic-silicone resin exceeds the above-described range, crystals may be increased in the resin itself, which may make the normal coating film formation difficult. In a case where the particle size of the acrylic-silicone resin is below the range described above, the bonding force between the resin particles increases, which may reduce the storability of the coating composition. In a case where the particle size of the acrylic-silicone resin exceeds the above-described range, the crosslinking density is decreased in a case of forming the coating film, which may result in the deterioration of properties such as water resistance or coating film strength.

The coating composition according to the present invention may contain 10% to 60% by weight, for example, 15% to 35% by weight of the acrylic-silicone resin, based on the total weight of the composition. In a case where the content of the acrylic-silicone resin is below the range described above, coating film formation proceeds poorly, which may result in poor water resistance and poor weather resistance. In a case where the content of the acrylic-silicone resin exceeds the above-described range, the sagging resistance of the coating film in spray coating is decreased, which may result in poor coating in case of forming a thick coating of a thickness of 500 µm or more based on a wet coating film.

### Flame retardant

The coating composition according to the present invention contains an inorganic flame retardant and a liquid phosphorus-based flame retardant as flame retardants. The inorganic flame retardant undergoes thermal decomposition at a temperature of 180°C or higher to release water, and undergoes an endothermic reaction on a surface of a solid, thereby acting to cool a polymer and reduce thermal decomposition. The liquid phosphorus-based flame retardant slows down a thermal decomposition rate of the cured coating film, provides flexibility to a foam layer, and prevents cracking from occurring in the carbonized layer, thereby making it possible to ensure long-term fire resistance performance. The inorganic flame retardant has poor compatibility with a matrix substance, and thus in a case of being applied alone, the flexibility of the foam layer is insufficient, which may result in poor stability of the coating film and may result in poor long-term fire resistance stability. In the present invention, by mixing the above-described inorganic flame retardant and the above-described liquid phosphorus-based flame retardant, the thermal decomposition rate is effectively slowed down and at the same time, the cracking of the carbonized layer is prevented, whereby the heat resistance, weather resistance, and fire propagation delay performance of the coating film may be further improved.

The above-described inorganic flame retardant may be one or more selected from the group consisting of aluminum hydroxide (Al(OH)₃), calcium carbonate (CaCO₃), antimony trioxide (Sb₂O₃), antimony pentoxide (Sb₂O₅), molybdenum trioxide (MoO₃), zinc stannate (Zn₂SnO₄), magnesium carbonate (Mg(HCO₃)₂), zinc borate, magnesium hydroxide (Mg(OH)₂), and melamine cyanurate.

The above-described liquid phosphorus-based flame retardant may be one or more selected from the group consisting of triphenyl phosphate (TPP), isopropylated triphenyl phosphate, tricresyl phosphate, butylated triphenyl phosphate, cresyl diphenyl phosphate, isopropyl phenyl diphenyl phosphate, a triethyl phosphate polymer, oxirane, and phosphorus oxide.

For example, in the liquid phosphorus-based flame retardant, the content of triphenyl phosphate (TPP) may be 20% by weight or less, and the thermal decomposition temperature may be 250°C or higher (that is, an amount loss by heating is less than 5% at 250°C). In a case where a liquid phosphorus-based flame retardant having a TPP content larger than 20% by weight and having a thermal decomposition temperature of lower than 250°C is used, TPP, which is a low-molecular-weight substance, vaporizes at a lower temperature as compared with a cured epoxy resin, whereby initial foaming is improved; however, gas toxicity may increase and long-term fire resistance performance may deteriorate.

The coating composition according to the present invention may contain 5% to 30% by weight, for example, 5% to 15% by weight of the inorganic flame retardant, and 0.1% to 1.5% by weight, for example, 0.1 to 1% by weight of the liquid phosphorus-based flame retardant, based on the total weight of the composition. In a case where the content of the above-described inorganic flame retardant and liquid phosphorus-based flame retardant is below the range described above, the coating film may not be allowed to ensure sufficient flame retardancy. In a case where the content of the above-described inorganic flame retardant and liquid phosphorus-based flame retardant exceeds the above-described range, cracking occurs in the coating film during spray coating, which may cause poor thickening.

For example, the mixing ratio of the above-described inorganic flame retardant and the above-described liquid phosphorus-based flame retardant may be 1:0.01 to 0.15 in terms of weight ratio. In a case where the above-described flame retardant is contained in the above-described mixing ratio range, the combustion time of the coating film can be delayed, and the toxicity of the combustion gas can be effectively reduced.

### Foaming agent

The coating composition according to the present invention may contain a foaming agent. The foaming agent decomposes at the time when a cured coating film is softened and liquified by being exposed to heat at a high temperature and a carbonized layer is formed. Then, the foaming agent allows a large amount of inert gas to be generated and as a result, acts to form fine pores in the carbonized layer, thereby imparting insulation performance. In addition, the foaming agent decomposes by heat at high a temperature, causes an endothermic reaction, and allows a carbonized layer to be formed, whereby the foaming agent can delay the fire propagation by cooling the surface and blocking contact with oxygen.

As the foaming agent, ammonium polyphosphate (APP), melamine, pentaerythritol, or a mixture thereof can be used; however, the foaming agent is not limited thereto.

The coating composition according to the present invention may contain 3% to 12% by weight, for example, 5% to 10% by weight of the foaming agent, based on the total weight of the composition. In a case where the content of the foaming agent is below the range described above, the coating does not expand sufficiently, which may deteriorate heat blocking performance. In a case where the content of the foaming agent exceeds the range described above, the coating expands excessively, thereby causing cracking to occur in the carbonized layer and reducing the strength, which may not allow heat blocking performance to be exhibited sufficiently.

For example, the mixing ratio of the acrylic-silicone resin and the foaming agent may be 1:0.1 to 0.5, for example, 1:0.2 to 0.4 in terms of weight ratio. In a case where the above-described acrylic-silicone resin and the above-described foaming agent are contained in the mixing ratio range described above, the foaming rate of the carbonized layer can be increased, thereby effectively blocking the heat transfer of the base material.

### Additive

The coating composition according to the present invention may further contain additives such as water, a coating film forming agent, an acid catalyst, a carbonizing agent, a pigment, a reinforcing agent, a dispersing agent, an antifoaming agent, an anti-freezing agent, and a preservative to exhibit optimal coating composition performance and optimal coating film performance.

A coating film forming agent decreases the minimum film formation temperature (MFFT) and allows a coating film to be formed at a low temperature. As the coating film forming agent, 2-ethylhexyl benzoate, acetyl tributyl citrate (ATBC), diisobutyl adipate (DIBA), or a mixture thereof, or the like can be used.

An acid catalyst decomposes at the time when a cured coating film is softened by being exposed to heat at a high temperature, thereby promoting the formation of the carbonized layer and promoting the foaming of the carbonized layer. As the acid catalyst, ammonium phosphate, ammonium polyphosphate, melamine polyphosphate, melamine monophosphate, melamine bisphosphate, or a mixture thereof, or the like can be used.

A carbonizing agent reacts with a foaming agent at a high temperature to form a carbonized layer that exhibits fire resistance performance. Pentaerythritol, or the like can be used as the carbonizing agent.

A pigment forms a ceramic insulating layer on the foamed coating film, thereby acting to improve fire resistance performance. Titanium dioxide or the like can be used as the pigment.

A thickener provides hydrophilicity to allow hydrogen bonds to interact within the coating, thereby acting to impart thixo characteristics, prevent the coating film from flowing during coating, and improve the storability of the coating. As the thickener, a water-soluble polyamide wax, or the like can be used.

A reinforcing agent imparts thixotropic properties to the coating to prevent flowing during coating, is evenly distributed within the dry coating film to prevent cracks, and enhances the strength of the foamed carbonized layer in case where fire occurs, thereby acting to maintain insulation performance even at a high temperature. Glass fibers or the like can be used as the reinforcing agent.

The coating composition according to the present invention may contain water as a solvent, which serves to adjust the viscosity of the coating and impart fluidity to the coating.

The above-described additives may be appropriately added within a content range publicly known in the related technical field, and for example, 0.1% to 20% by weight each of the above-described additives may be contained based on the total weight of the above-described composition.

### MODE FOR CARRYING OUT THE INVENTION

Hereinafter, the present invention will be described in more detail through examples. However, the following examples are merely for the assistance of the understanding of the present invention, and the scope of the present invention is not limited to the examples in any sense.

### [Experimental Example 1-11]

Each component was charged according to Tables 1 and 2 below to manufacture a coating composition of each experimental example.

**[Table 1]**

| Component (% by weight) | Experimental Example 1 | Experimental Example 2 | Experimental Example 3 | Experimental Example 4 | Experimental Example 5 |
|---|---|---|---|---|---|
| Resin 1 | 25 | 15 | 25 | 25 | |
| Resin 2 | | | | | 25 |
| Resin 3 | | | | | |
| Resin 4 | | | | | |
| Resin 5 | | | | | |
| Resin 6 | | | | | |
| Resin 7 | | | | | |
| Inorganic flame retardant | 10 | 10 | 10 | 10 | 10 |
| Liquid phosphorus-based flame retardant | 0.5 | 0.5 | 0.01 | 2 | 0.5 |
| Foaming agent | 8 | 8 | 8 | 8 | 8 |
| Solvent (water) | 14 | 14 | 14.49 | 12.5 | 14 |
| Dispersing agent | 0.5 | 0.5 | 0.5 | 0.5 | 0.5 |
| Antifoaming agent 1 | 0.3 | 0.3 | 0.3 | 0.3 | 0.3 |
| Antifoaming agent 2 | 0.4 | 0.4 | 0.4 | 0.4 | 0.4 |
| Acid catalyst | 15 | 25 | 15 | 15 | 15 |
| Carbonizing agent | 8.6 | 8.6 | 8.6 | 8.6 | 8.6 |
| Pigment | 9 | 9 | 9 | 9 | 9 |
| Thickener | 3 | 3 | 3 | 3 | 3 |
| Coating film forming agent | 1.5 | 1.5 | 1.5 | 1.5 | 1.5 |
| Anti-freezing agent | 1 | 1 | 1 | 1 | 1 |
| Preservative | 0.2 | 0.2 | 0.2 | 0.2 | 0.2 |
| Reinforcing agent | 3 | 3 | 3 | 3 | 3 |
| Total | 100 | 100 | 100 | 100 | 100 |

**[Table 2]**

| Component (% by weight) | Experimental Example 6 | Experimental Example 7 | Experimental Example 8 | Experimental Example 9 | Experimental Example 10 | Experimental Example 11 |
|---|---|---|---|---|---|---|
| Resin 1 | | | | | | 25 |
| Resin 2 | | | | | | |
| Resin 3 | 25 | | | | | |
| Resin 4 | | 25 | | | | |
| Resin 5 | | | 25 | | | |
| Resin 6 | | | | 25 | | |
| Resin 7 | | | | | 25 | |
| Inorganic flame retardant | 10 | 10 | 10 | 10 | 10 | 10 |
| Liquid phosphorus-based flame retardant | 0.5 | 0.5 | 0.5 | 0.5 | 0.5 | |
| Foaming agent | 8 | 8 | 8 | 8 | 8 | 8 |
| Solvent (water) | 14 | 14 | 14 | 14 | 14 | 14.5 |
| Dispersing agent | 0.5 | 0.5 | 0.5 | 0.5 | 0.5 | 0.5 |
| Antifoaming agent 1 | 0.3 | 0.3 | 0.3 | 0.3 | 0.3 | 0.3 |
| Antifoaming agent 2 | 0.4 | 0.4 | 0.4 | 0.4 | 0.4 | 0.4 |
| Acid catalyst | 15 | 15 | 15 | 15 | 15 | 15 |
| Carbonizing agent | 8.6 | 8.6 | 8.6 | 8.6 | 8.6 | 8.6 |
| Pigment | 9 | 9 | 9 | 9 | 9 | 9 |
| Thickener | 3 | 3 | 3 | 3 | 3 | 3 |
| Coating film forming agent | 1.5 | 1.5 | 1.5 | 1.5 | 1.5 | 1.5 |
| Anti-freezing agent | 1 | 1 | 1 | 1 | 1 | 1 |
| Preservative | 0.2 | 0.2 | 0.2 | 0.2 | 0.2 | 0.2 |
| Reinforcing agent | 3 | 3 | 3 | 3 | 3 | 3 |
| Total | 100 | 100 | 100 | 100 | 100 | 100 |

| | | | | | | |
|---|---|---|---|---|---|---|
| Resin 1: Acrylic-silicone resin (containing MPTMS and MTMS, solid content: 45%, Tg: 30°C, D50: 120 nm, PH: 8.3, acid value: 24, MFFT: 46°C) Resin 2: Vinyl acetate copolymer (Emultex 8200, Synthomer, MFFT: 14°C) Resin 3: Acrylic-silicone resin (containing MPTMS and MTMS, solid content: 20%, Tg: 30°C, D50: 120 nm, PH: 8.5, acid value: 24, MFFT: 38°C) Resin 4: Acrylic-silicone resin (containing MPTMS and MTMS, solid content: 60%, Tg: 30°C, D50: 120 nm, PH: 8.5, acid value: 24, MFFT: 44°C) Resin 5: Acrylic-silicone resin (containing MPTMS and MTMS, solid content: 45%, Tg: -5°C, D50: 120 nm, PH: 8.3, acid value: 24, MFFT: 0°C) Resin 6: Acrylic-silicone resin (containing MPTMS and MTMS, solid content: 45%, Tg: 50°C, D50: 120 nm, PH: 8.3, acid value: 24, MFFT: 60°C) Resin 7: Acrylic-silicone resin (containing MPTMS but not containing MTMS, solid content: 45%, Tg: 30°C, D50: 120 nm, PH: 8.3, acid value: 24, MFFT: 40°C) Inorganic flame retardant: Aluminum hydroxide Liquid phosphorus-based flame retardant: Reofos 65 (Lanxess) Foaming agent: Melamine Dispersing agent: TEGO 752W (EVONIK) Antifoaming agent 1: TEGO Antifoam 3062 (EVONIK) Antifoaming agent 2: Aliphatic Hydrocarbons Oil (EDW-808, HS CHEM) Acid catalyst: Ammonium polyphosphate (JLS-APP, JLS) Carbonizing agent: Pentaerythritol Pigment: Titanium Dioxide Thickener: HR 300 (HS CHEM) Coating film forming agent: Texanol (EASTMAN CHEMICAL) Anti-freezing agent: Propylene Glycol Preservative: Acticide MBS (THOR SPECIALTIES) Reinforcing agent: Glass Fiber (MS-605, LAPINUS) | | | | | | |

### [Evaluation of properties]

The properties of the coating composition of each experimental example were measured as follows, and the results are shown in Tables 3 and 4.

### Flame retardancy

According to UL-94, the flame retardancy of the coating composition manufactured according to each experimental example was evaluated.

### (Flame retardant class: 5V > V0 > V1 > V2)

### Fire resistance performance

According to IMO Res.MSC307(88) (electric furnace: 850°C), the fire resistance performance of the coating composition manufactured according to each experimental example was evaluated.

### Water resistance

Using the coating composition manufactured in each experimental example, a test piece was prepared by coating it on an iron base material (dry coating film thickness: 1 mm). After the above-described test piece was immersed in clean water at ordinary temperature (25°C) for 1 day, the occurrence of blistering on the coating film was visually observed on the 1st, 3rd, 5th, and 7th day after drying.

### Coating film strength (pencil hardness)

The coating film strength was measured using a Mitsubishi Pencil according to ASTM D3363.

### (Pencil hardness: 3H > 2H > H > F > HB > B > 2B)

### Storability

The KU viscosity of the coating composition manufactured in each experimental example was measured before and after being charged into a constant temperature and humidity chamber (60°C X 7 days, RH: 0%) to evaluate the storability of the coating composition.

**[Table 3]**

| | | Experimental Example1 | | | | |
|---|---|---|---|---|---|---|
| | | 1 | 2 | 3 | 4 | 5 |
| Flame retardancy | | V0 | V0 | V2 | V1 | Fail |
| Fire resistance performance | Backside temperature exceeds 200°C | 18 minutes | 22 minutes | 10 minutes | 13 minutes | 5 minutes |
| | Backside temperature exceeds 300°C | 37 minutes | 41 minutes | 19 minutes | 23 minutes | 10 minutes |
| | Backside temperature exceeds 400°C | 58 minutes | 62 minutes | 23 minutes | 29 minutes | 19 minutes |
| Water resistance | 1 day after drying | Good | Good | Good | Good | Blister |
| | 3 days after drying | Good | Good | Good | Good | Blister |
| | 5 days after drying | Good | Good | Good | Good | Blister |
| | 7 days after drying | Good | Good | Good | Good | Blister |
| Coating film strength | Pencil hardness | H | H | H | B | H |
| Coating storability (KU) | Ordinary temperature | 105 | 110 | 104 | 106 | 108 |
| | Heat storability (60°C X 7 days) | 106 | 113 | 107 | 108 | 110 |
| | Viscosity change | 1 | 3 | 3 | 2 | 2 |

**[Table 4]**

| | | Experimental Example | | | | | |
|---|---|---|---|---|---|---|---|
| | | 6 | 7 | 8 | 9 | 10 | 11 |
| Flame retardancy | | Fail | Fail | Fail | Fail | Fail | Fail |
| Fire resistance performance | Backside temperature exceeds 200°C | 9 minutes | 18 minutes | 13 minutes | Unable to experime nt | 9 minutes | 9 minutes |
| | Backside temperature exceeds 300°C | 15 minutes | 37 minutes | 28 minutes | Unable to experime nt | 15 minutes | 18 minutes |
| | Backside temperature exceeds 400°C | 24 minutes | 58 minutes | 35 minutes | Unable to experime nt | 24 minutes | 22 minutes |
| Water resistance | 1 day after drying | Blister | Good | Blister | Unable to experime nt | Blister | Good |
| | 3 days after drying | Blister | Good | Blister | Unable to | Blister | Good |
| | | | | | experime nt | | |
| | 5 days after drying | Blister | Good | Blister | Unable to experime nt | Blister | Good |
| | 7 days after drying | Good | Good | Good | Unable to experime nt | Good | Good |
| Coating film strength | Pencil hardness | B | H | 6B | Unable to experime nt | B | H |
| Paint storability (KU) | Ordinary temperature | 99 | Gel | 105 | 108 | 99 | 103 |
| | Heat storability (60°C X 7 days) | 102 | Gel | 106 | 110 | 102 | 105 |
| | Viscosity change | 3 | Unable to measure | 1 | 2 | 3 | 2 |

As shown in Tables 3 and 4 above, the coating compositions of Experimental Examples 1 to 4 according to the present invention showed, excellent properties in the overall evaluation items. On the other hand, all of the coating compositions of Experimental Example 5 using a vinyl acetate copolymer (resin 2) instead of the acrylic-silicone resin, Experimental Examples 6 to 9 using acrylic-silicone resins (resin 3 to 6), of which properties thereof are out of the property range according to the present invention, Experimental Example 10 using an acrylic-silicone resin (resin 7) containing MPTMS but not containing MTMS, and Experimental Example 11 not containing a liquid phosphorus-based flame retardant exhibited properties inferior to those of the coating compositions of Experimental Examples 1 to 4.

### INDUSTRIAL APPLICABILITY

The present invention provides a coating composition having excellent heat resistance, weather resistance, and fire propagation delay performance. The coating composition according to the present invention can be applied for coating of a secondary battery, particularly for coating of a battery module or battery pack of an electric vehicle. The coating composition according to the present invention can delay the fire propagation between electric vehicle battery modules, thereby ensuring the time for human evacuation, and can locally limit the area where fire occurs, thereby minimizing the recovery range in a case of repairing a battery.

## Claims

1. A coating composition comprising an acrylic-silicone resin and a flame retardant comprising an inorganic flame retardant and a liquid phosphorus-based flame retardant,
wherein the acrylic-silicone resin comprises a 3-(meth)acryloxypropyltrimethoxysilane (MPTMS) group and a methyltrimethoxysilane (MTMS) group, and
the acrylic-silicone resin has a solid content 30% to 50% and has a glass transition temperature of 0°C to 45°C.

2. The coating composition according to claim 1, wherein a mixing ratio of the inorganic flame retardant and the liquid phosphorus-based flame retardant is 1:0.01 to 0.15 in terms of weight ratio.

3. The coating composition according to claim 1, wherein the liquid phosphorus-based flame retardant has a content of triphenyl phosphate (TPP) of 20% by weight or less and has a thermal decomposition temperature of 250°C or higher.

4. The coating composition according to claim 1, wherein the coating composition comprises 10% to 60% by weight of the acrylic-silicone resin, 5% to 30% by weight of the inorganic flame retardant, and 0.1% to 1.5% by weight of the liquid phosphorus-based flame retardant, based on a total weight of the composition.

5. The coating composition according to claim 4, further comprising 3% to 12% by weight of a foaming agent based on the total weight of the composition.

6. The coating composition according to claim 5, wherein a mixing ratio of the acrylic-silicone resin and the foaming agent is 1:0.1 to 0.5 in terms of weight ratio.
